# NEUE EUROPÄISCHE PATENTSCHRIFT

(11) **EP 1 912 806 B2**
(45) Veröffentlichungstag und Bekanntmachung des Hinweises auf die Entscheidung über den Einspruch: **07.02.2018**
(45) Hinweis auf die Patenterteilung: 07.07.2010
(21) Anmeldenummer: 06776722.8
(22) Anmeldetag: 09.08.2006
(51) Int. Cl.: B60G 9/00, B60G 7/00

(54) **RADAUFHÄNGUNGSLENKER**
WHEEL SUSPENSION ARM
BRAS OSCILLANT DE SUSPENSION

(30) Priorität: 12.08.2005 DE 102005038274
(43) Veröffentlichungstag der Anmeldung: 23.04.2008
(73) Patentinhaber: SAF-HOLLAND GmbH, 63856 Bessenbach (DE)
(72) Erfinder: KOSCHINAT, Hubert, B., 63768 Hösbach (DE)
(74) Vertreter: Müller Schupfner & Partner Patent- und Rechtsanwaltspartnerschaft mbB
(86) Internationale Anmeldenummer: PCT/EP2006/007901
(87) Internationale Veröffentlichungsnummer: WO 2007/020003

(56) Entgegenhaltungen:
- EP-B- 1 315 626
- WO-A-01/53779
- WO-A-03/066355
- WO-A1-2005/025900
- WO-A2-2004/054825
- DE-C3- 3 333 525
- US-A- 1 325 832
- US-A- 1 406 209
- US-A- 5 037 126
- US-A- 5 203 585
- US-A- 5 375 871
- US-B1- 6 340 165
- US-B1- 6 659 488

## Beschreibung

Die vorliegende Erfindung betrifft einen Radaufhängungslenker, insbesondere einen Längslenker für ein Fahrzeug sowie eine Radaufhängung mit einem derartigen Radaufhängungslenker.

Nach dem Stand der Technik ist gemäß dem Gebrauchsmuster DE 296 16 257 U1 eine aus einem Achsrohr bestehende Starrachse durch ein Paar kastenförmige Längslenker hindurchgeführt und mit den Längslenkern verschweißt. Um ein Verschweißen der Längslenker mit dem Achsrohr zu ermöglichen, müssen diese aus einem Material hergestellt sein, das sich mit dem Material des Achsrohrs verschweißen läßt, beispielsweise Stahl. Darüber hinaus kann eine Nachbearbeitung, wie beispielsweise Korrosionsschutz und Lackierung, erst nach dem Verschweißen aufgetragen werden.

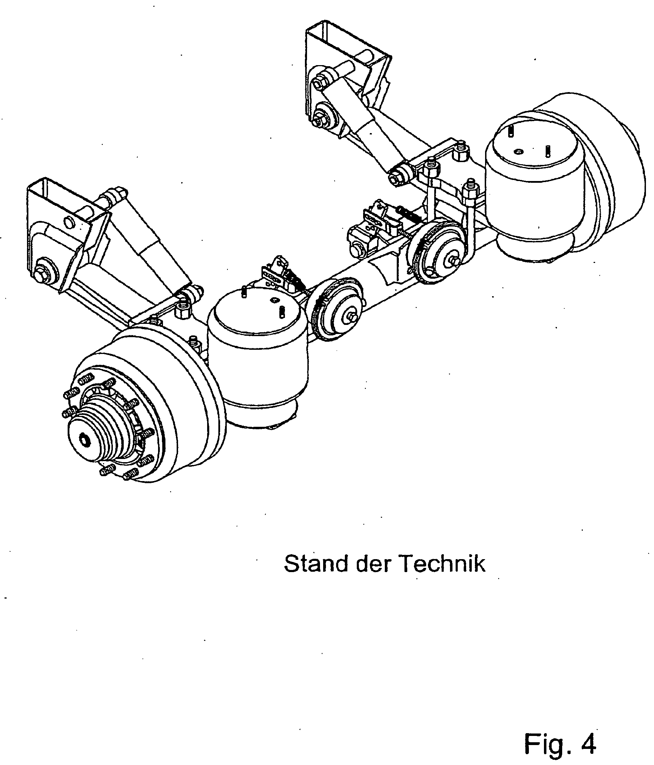

Ein Verschweißen der Längslenker mit der Starrachse kann vermieden werden, wenn die Längslenker jeweils mit einem Paar U-förmiger Stahlbügel an die Starrachse geklemmt werden, wie in Figur 4 gezeigt ist. Diese Art der Achsbefestigung eignet sich insbesondere bei der Verwendung von Blattfedern. Beim Einsatz einer Luftfederung erfordert diese Art der Befestigung jedoch eine Vielzahl an Einzelteilen und einen verhältnismäßig hohen Aufwand bei der Montage/Demontage des Längslenkers, da jeder Längslenker jeweils mit zusätzlichen Positionierteilen versehen ist und jeweils vier Schrauben für jeden Längslenker anzuziehen sind.

Die WO 03/066355 A1 offenbart ein Fahrzeugaufhängungssystem mit einem Längslenker, welcher eine Gelenköffnung zum schwenkbaren Befestigen an einem Fahrzeugrahmen und eine im Wesentlichen gegenüberliegende Achsöffnung aufweist, die zum Befestigen eines Achselement dient.

Die US-6,340,165 B1 offenbart einen Radaufhängungslenker für ein Fahrzeug mit einer Gelenköffnung zum schwenkbaren Befestigen des Radaufhängungslenkers an dem Fahrzeugrahmen und einem U-profilförmigen Bereich, der ausgelegt ist, ein Achselement aufzunehmen, wobei dieses zwischen den die Schenkel des Us bildenden Seitenwänden verklemmt ist.

Die Aufgabe der Erfindung besteht in der Schaffung eines Radaufhängungslenker für ein Fahrzeug, der kostengünstig herstellbar und auf einfache Weise montierbaNdemontierbar ist. Darüber hinaus soll ein korrespondierendes Verfahren sowie eine Radaufhängung mit einem derartigen Radaufhängungslenker geschaffen werden.

Diese Aufgabe wird durch Radaufhängungen mit den Merkmalen nach Ansprüchen 1 und 3, und Verfahren mit den Merkmalen nach Ansprüchen 9 und 11 gelöst. Vorteilhafte Weiterbildungen und der Erfindung sind in den abhängigen Ansprüchen definiert.

Erfindungsgemäß wird ein Radaufhängungslenker, insbesondere ein Längslenker, für ein Fahrzeug geschaffen mit: einer Gelenköffnung zum schwenkbaren Befestigen des Radaufhängungslenkers an einem Fahrzeugrahmen und einer Achsöffnung zum Befestigen eines Achselements an dem Radaufhängungslenker, wobei die Achsöffnung an ihrem Umfangsrand zumindest eine Unterbrechung bzw. Ausnehmung, wie einen Schlitz, aufweist.

Indem der Radaufhängungslenker einfach auf ein Achsrohr geklemmt wird, kann dieser auf einfache Weise montiert und demontiert werden. Darüber hinaus weist eine Radaufhängung mit einem derartigen Radaufhängungslenker eine minimale Anzahl an Bauteilen auf. Das Achsrohr und der Radaufhängungslenker können vor der Montage einen Korrosionsschutz, eine Lackierung und dergleichen erhalten, da kein Verschweißen mehr erforderlich ist. Indem die Achsöffnung im wesentlichen denselben Durchmesser wie der korrespondierende Abschnitt des Achsenelements hat, wird eine Klemmung geschaffen, die ein hohes Drehmoment übertragen kann. Die Achsöffnung hat dabei vorzugsweise eine Übergangspassung. Es ist jedoch auch möglich, eine Spielpassung mit einem geringen Spiel von ca. 0,05 mm bis 0,5 mm vorzusehen oder eine Preßpassung, bei der die Achsöffnung einen geringfügig kleineren Durchmesser als das Achsenelement hat. In diesem Fall kann der Längslenker vorzugsweise für die Montage erwärmt werden, um den Durchmesser aufzuweiten oder der Radaufhängungslenker kann auf das Achsenelement aufgepreßt werden. Darüber hinaus kann der Umfangsrand der Achsöffnung an der Unterbrechung aufgespreizt werden, um den Durchmesser aufzuweiten.

Es ist ein Befestigungsmittel angeordnet, um die Unterbrechung bzw. eine Abmessung/Distanz der Unterbrechung so zu verringern, dass der Radaufhängungslenker an dem Achsenelement klemmbar ist.

Des weiteren ist die Achsöffnung vorzugsweise im wesentlichen kreisrund, wobei die Achsöffnung im wesentlichen denselben Durchmesser wie ein korrespondierender Abschnitt des Achsenelements hat. Die Achsöffnung kann aber auch andere Konfigurationen aufweisen, wenn das Achselement beispielsweise einen ovalen Querschnitt oder andere, in technischer Hinsicht brauchbare Querschnittskonfigurationen aufweist, solange die verwendeten Querschnittskonfigurationen einen weitgehend geschlossenen Querschnitt haben. Anstelle von Achselementen können auch Achsschenkelträger nach außen oder Torsionselemente, beispielsweise in Form einer Querstrebe, welche die beiden Radaufhängungslenker verbindet, entsprechender Querschnittskonfigurationen nach innen in die Achsöffnung des Radaufhängungslenkers eingesetzt werden, an denen dann entsprechende Achselemente angeordnet sind. Ebenso ist eine Funktionsaufteilung denkbar, bei der die Achsschenkelträger und das Torsionselement nicht in der selben Achslinie liegen, sondern auf parallel zueinander verlaufenden Achsen. Dabei können dann bei geeignet gewähltem Abstand sowohl das Torsionselement als auch der Achsschenkeiträger in zwei Achsöffnungen jeweils durch Klemmung befestigt werden.

Zweckmäßigerweise ist die Achsöffnung im wesentlichen der Formgebung des korrespondierenden Achsenelementes angepasst.

Die Unterbrechung ist durch einen Schlitz gebildet, der in einer im Wandbereich des Radaufhängungslenkers ausgebildeten Ausnehmung, beispielsweise in Form einer kreisrunden oder ovalen Öffnung endet. Hierdurch wird die Bildung von Spannungsrissen an einem Ende der Unterbrechung bzw. des Schlitzes vermieden Vorzugsweise ist der Radaufhängungslenker aus Sphäroguß GGG, Grauguß GG oder Vermicular-Graphitguß GGV gegossen, so dass dieser auf kostengünstige Weise hergestellt werden kann.

Des weiteren sind vorzugsweise ein Aufnahmeelement für eine Feder der Fahrzeugachse und Befestigungsmittel für einen Stoßdämpfer an dem Radaufhängungslenker angeordnet.

Darüber hinaus ist weiter bevorzugt zumindest ein Eingriffsmittel für einen formschlüssigen Eingriff der Achsöffnung mit einem Achselement angeordnet, so dass das Achselement auf einfache Weise in dem Längslenker positioniert werden kann. Weiterhin können die Eingriffsmittel eine fail-safe-Funktion (im Fehlerfall sicher) im Falle des Versagens der Klemmung und/oder eine Indikatorfunktion zur Ermittlung einer ungewünschten Verdrehung des Achselements bilden.

Der erfindungsgemäße Radaufhängungslenker weist bevorzugt ein T-Profil oder ein im wesentlichen offenes Doppel-T-Profil auf, so dass der Radaufhängungslenker eine hohe Torsions- und Biegesteifigkeit hat

Darüber hinaus wird ein Verfahren zum Herstellen eines Radaufhängungslenkers für ein Fahrzeug mit folgenden Schritten geschaffen: Herstellung durch Gießen eines Radaufhängungslenkers mit einer Achsöffnung für die Aufnahme eines Achsenelements und Vorsehen einer Unterbrechung in Form eines Schlitzes, am Umfangsrand der Achsöffnung.

Es ist ein Befestigungsmittel im Bereich der Unterbrechung vorgesehen, um gegebenenfalls eine zusätzliche Klemmung zu erzeugen.

Vorzugsweise wird zumindest ein Eingriffsmittel für einen formschlüssigen Eingriff der Achsöffnung mit einem Achselement ausgebildet.

Schließlich wird eine Radaufhängung mit einer Rohrachse als ein Achselement und einem Paar erfindungsgemäßer Radaufhängungslenker geschaffen, wobei die Radaufhängung des weiteren vorzugsweise mit einem geklemmten Bremsträger versehen ist, so dass der Längslenker oder das Achsrohr nach vorheriger Demontage des geklemmten Bremsträgers von dem Achsrohr demontiert werden kann.

Nachfolgend wird ein Ausführungsbeispiel der Erfindung unter Bezugnahme auf die beigefügten Zeichnungen näher erläutert.
Figur 1 zeigt die erfindungsgemäße Radaufhängung mit einem Längslenker 1, einem Achsrohr 2 und einem geklemmten Bremsträger 3.

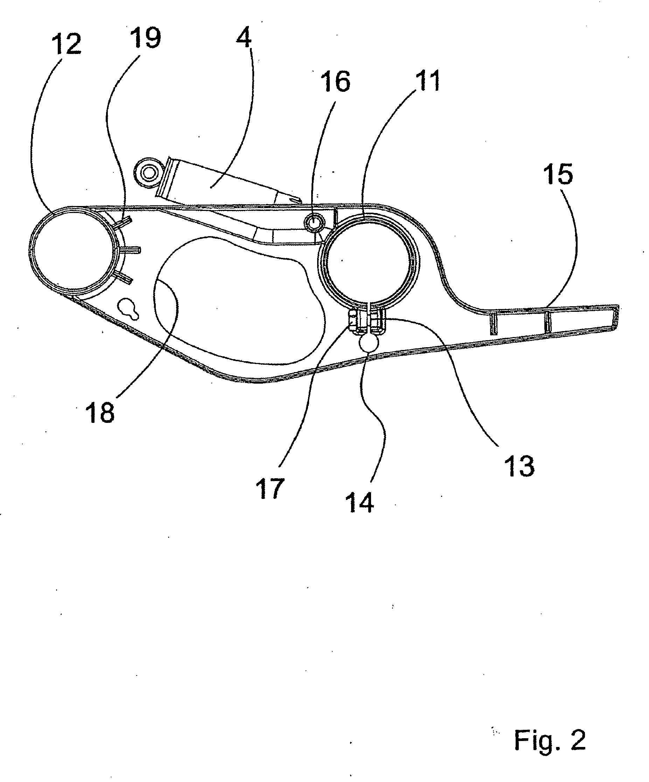

Figur 2 zeigt eine Seitenansicht des erfindungsgemäßen Längslenkers 1 mit einem daran angebrachten Stoßdämpfer 4.
Figur 3 zeigt eine perspektivische Ansicht des erfindungsgemäßen Längslenkers 1 mit einem daran angebrachten Stoßdämpfer 4.
Figur 4 zeigt eine Radaufhängung mit einem Paar Längslenker und einer Starrachse nach dem Stand der Technik.

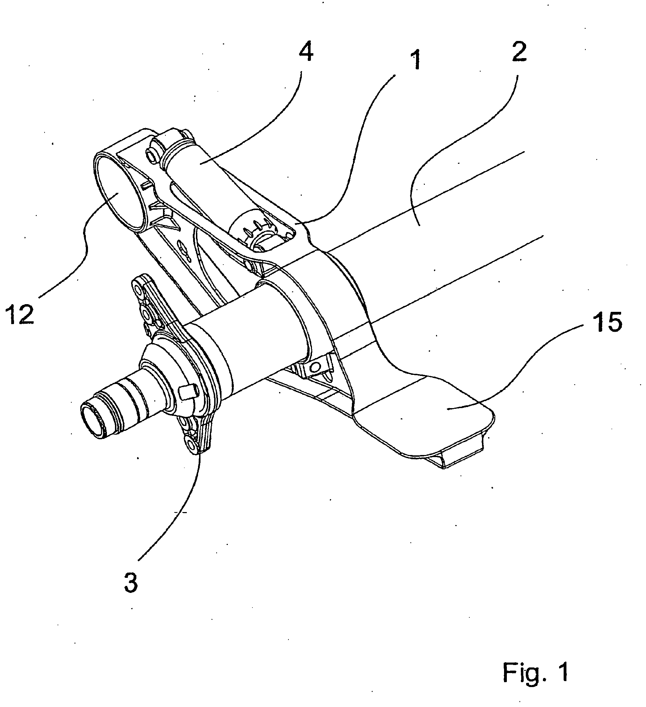

Wie in Figur 1 gezeigt, ist ein Achsrohr 2 einer Starrachse durch eine Achsöffnung 11 des erfindungsgemäßen Längslenkers 1 hindurchgeführt und ein geklemmter Bremsträger 3 ist an einem Ende des Achsrohrs angebracht. Darüber hinaus ist ein Stoßdämpfer 4 an dem Längslenker 1 angebracht und der Längslenker 1 weist eine Federaufnahme 15 sowie eine Gelenköffnung 12 auf. Der Längslenker 1 wird über die Gelenköffnung 12 an einem (nicht dargestellten) Fahrzeugrahmen schwenkbar angebracht, beispielsweise über ein Gummimetallelement. Darüber hinaus wird ein (nicht gezeigtes) Federelement zwischen einem Fahrzeugrahmen und der Federaufnahme 15 des Längslenkers 1 eingesetzt. Das Federelement weist dabei vorzugsweise eine (nicht gezeigte) Luftfeder auf. Das Achsrohr 2 weist auf der anderen (nicht gezeigten) Fahrzeugseite ebenfalls einen Längslenker 1 auf, so daß die Radaufhängung durch ein Paar Längslenker 1 und ein Achsrohr 2 gebildet wird.

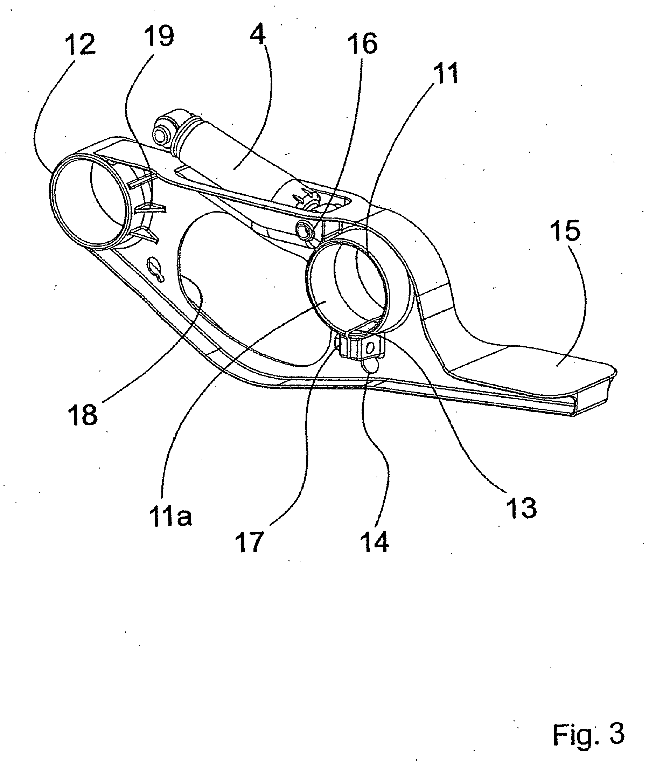

Der erfindungsgemäße Längslenker 1 ist vorzugsweise aus Grauguß, wie beispielsweise GG-60, Kugelgraphitguß (Sphäroguß GGG) oder Vermicular-Graphitguß (GGV) hergestellt und weist ein Doppel-T-Profil mit einer Öffnung 18 auf, wie am besten aus Figur 3 ersichtlich ist. Dabei ist ein Längslenker 1 aus Grauguß besonders kostengünstig herzustellen, während ein Längslenker 1 aus Kugelgraphitguß GGG oder Vermicular-Graphitguß GGV eine höhere Festigkeit aufweist.

Die Gelenköffnung 12 und die Achsöffnung 11 können nach dem Herstellen nachbearbeitet werden, um einen noch besseren Paßsitz zu bilden. Der Durchmesser der Achsöffnung 11 entspricht dabei im wesentlichen dem Durchmesser des Achselements bzw. Achsrohrs 2, auf das der Längslenker 1 aufgesetzt wird. Darüber hinaus weist ein Umfangsrand 11a der Achsöffnung 11 eine Ausnehmung bzw. Unterbrechung 13 in der Form eines Schlitzes auf, um über ein Befestigungsmittel, wie beispielsweise eine Klemmschraube 17, eine Klemmung der Achsöffnung 11 an dem Achselement zu ermöglichen. In anderen Worten wird eine Breite der Unterbrechung 13 durch Anziehen der Klemmschraube 17 verringert, wodurch eine Klemmung des Längslenkers 1 an einem Achselement ermöglicht wird. Es können jedoch auch andere Klemmvorrichtungen verwendet werden, um die Unterbrechung, d.h. die sich durch die Unterbrechung ergebende Distanz in diesem Bereich, zwecks Klemmung zu verringern.

Der Paßsitz der Achsöffnung 11 wird vorzugsweise als Übergangspassung ausgeführt, d.h. der Durchmesser der Achsöffnung 11 entspricht im wesentlichen dem Durchmesser des Achselements, auf das der Längslenker 1 aufgesetzt wird. In anderen Worten hat der Durchmesser der Achsöffnung 11 sowohl eine Toleranz nach oben (Spiel) als auch eine Toleranz nach unten (Pressung). Durch die Übergangspassung wird eine Befestigung des Längslenkers 1 an dem Achselement erzielt, die ein hohes Drehmoment übertragen kann und ein Verschieben des Achselements in seitlicher Richtung auf sichere Weise verhindern kann, während gleichzeitig die Produktionskosten niedrig gehalten werden können, da die Toleranz des Paßsitzes nicht sehr eng ist. Darüber hinaus kann eine hohe Ausbeute erzielt werden, dadurch die verhältnismäßig große Toleranz des Paßsitzes ein Ausschuß der Fertigung der Längslenker niedrig gehalten werden kann. Die Toleranz sollte im Bereich von +/-0,05 bis 0,5 mm liegen, am besten im Bereich zwischen 0,2 bis 0,4 mm.

Für eine leichte Montage kann der Längslenker 1 erwärmt und/oder aufgespreizt werden.

Für Anwendungen mit niedrigeren Festigkeitsanforderungen kann der Paßsitz eine Spielpassung mit einem Spiel von 0,05 bis 0,5 mm erhalten, um eine besonders leichte Montage zu ermöglichen. Andererseits, wenn besonders hohe Anforderungen an die Festigkeit gestellt sind, kann natürlich auch eine Presspassung gewählt werden.

Der erfindungsgemäße Längslenker 1 kann bereits vor der Montage eine Oberflächenbehandlung, wie beispielsweise Korrosionsschutz und Lackierung, erhalten. Dies bietet den Vorteil, daß ein besonderer Korrosionsschutz während der Lagerhaltung als ein Ersatzteil entfallen kann und das Aufbringen eines Korrosionsschutzes und/oder einer Lackierung nach der Montage an dem Fahrzeug entfällt. In anderen Worten wird ein erfindungsgemäßer Längslenker 1 aus einem Lager entnommen und lediglich an einer Radaufhängung eines Fahrzeugs angeschraubt. Weitere Bearbeitungsschritte wie Aufbringen eines Korrosionsschutzes und Lackieren, wie sie nach dem Stand der Technik notwendig sind, können dabei entfallen.

Um die Klemmung der Achsöffnung 11 an einem Achselement noch weiter zu verbessern, kann die Achsöffnung 11 mit dem Achselement mittels geeigneter Kleber zusätzlich verklebt werden oder mit reibbeiwerterhöhenden Maßnahmen versehen werden.

Darüber hinaus kann ein zusätzliches Eingriffsmittel beispielsweise in der Form eines Vorsprungs oder einer Nut am Umfangsrand 11a der Achsöffnung 11 vorgesehen werden (obwohl dieses hier nicht gezeigt ist). Dieses Eingriffsmittel ermöglicht eine leichte Positionierung bei der Montage und kann darüberhinaus auch eine fail-safe-Funktion (im Fehlerfalle sicher) ermöglichen, d.h. beim Versagen des Reibschlusses der Klemmung wird das Achsrohr über dieses zusätzliche Eingriffsmittel durch einen Formschluß sicher gehalten. Ferner kann das Eingriffsmittel zusätzlich oder alleine auch eine Indikatorfunktion im Hinblick auf ein unerwünschtes Verdrehen des Achselements übernehmen.

Darüber hinaus weist der erfindungsgemäße Längslenker 1 eine Federaufnahme 15 an einem hinteren Endabschnitt sowie Befestigungsmittel 16 beispielsweise in der Gestalt einer Schrauböffnung für einen Stoßdämpfer 4 auf. Die Gelenköffnung 12 ist vorzugsweise durch eine Vielzahl von Rippen 19 an dem Körper des Längslenkers 1 abgestützt, um die Biege- und Torsionssteifigkeit in einer Querrichtung zu erhöhen. Diese Rippen 19 werden beispielsweise während eines Gießvorgangs ausgebildet.

Der erfindungsgemäße Längslenker 1 wird auf einfache Weise durch Gießen aus Grauguß, Sphäroguß oder Vermicular-Graphitguß hergestellt, wobei sämtliche Elemente angegossen werden. In anderen Worten ist der erfindungsgemäße Längslenker 1 einstückig durch Gießen hergestellt und lediglich die Achsöffnung 11 und die Gelenköffnung 12 müssen gegebenenfalls nachbearbeitet werden.

Vorzugsweise wird für eine Radaufhängung ein Paar derartiger Längslenker verwendet, wobei vorzugsweise eine starre Stahlrohrachse durch die Achsöffnungen 11 des Paars Längslenker 1 hindurch geschoben wird und daran über die Klemmschraube 17 geklemmt wird. Es ist jedoch auch möglich, bei einer Einzelradaufhängung lediglich eine kurzes Achsenelement durch die Achsöffnung 11 eines einzelnen Längslenkers 1 hindurch zu schieben. Im Falle der Starrachse kann die Radaufhängung einen geklemmten Bremsträger 3 aufweisen, wie am besten in Figur 1 gezeigt ist, so daß der Längslenker 1 auf einfache Weise demontierbar ist, indem das Gelenk an der Gelenköffnung 12 demontiert wird, der geklemmte Bremsträger 3 demontiert wird und anschließend die Achsöffnung 11 über die Klemmschraube 17 geöffnet wird, um den Längslenker 1 aus dem Achsrohr 2 herauszuziehen. Somit kann ein Längslenker 1 an einem Fahrzeug auf einfache Weise ausgetauscht werden.

Der Lenker 1 kann jedoch auch aus mehreren Teilen bestehen, die miteinander verschraubt werden. Obwohl es hier nicht dargestellt ist, kann der Längslenker 1 in etwa in der Mitte der Achsöffnung 11 geteilt sein und dann mit einem Paar Klemmschrauben 17 verschraubt werden. Um eine hohe Biege- und Torsionssteifigkeit des Längslenkers 1 zu erzielen, hat dieser ein Doppel-T-Profil mit einer großen Öffnung 18 in einem zentralen Mittelabschnitt, um Gewicht einzusparen. Die Gewichtseinsparung durch die große Öffnung 18 führt zu einer Verringerung der ungefederten Massen des mit dieser Radaufhängung versehenen Fahrzeugs, so daß die Straßenlage verbessert werden kann. Die Befestigungsmittel 16 für den Stoßdämpfer 4 sind vorzugsweise in einer gegossenen Mulde angeordnet, um einen Einbauraum eines Stoßdämpfers 4 der Radaufhängung zu verkleinern.

Die Erfindung ist jedoch nicht auf das hier gezeigte Ausführungsbeispiel beschränkt. Insbesondere sind folgende Abwandlungen des Ausführungsbeispiels möglich:
1) Der Längslenker kann auch aus einem anderen Material wie beispielsweise Aluminium oder einer Aluminiumlegierung oder einem anderen geeigneten Leichtmetall hergestellt, beispielsweise gegossen werden.
2) Die Federaufnahme 15 für die Feder und die Befestigungsmittel 16 für den Stoßdämpfer 4 der Fahrzeugachse können an der Achse selbst angeordnet sein, so daß diese nicht an dem Längslenker 1 angeordnet sind.
3) Der Längslenker kann ein anderes Profil als das hier gezeigte Doppel-T-Profil haben. Beispielsweise kann der Längslenker 1 ein geschlossenes Vierkantrohrprofil oder ein T-Profil aufweisen. Es ist jedoch auch jedes andere Profil denkbar, solange das Profil eine hohe Torsions- und Biegesteifigkeit aufweist.
4) Obwohl das gezeigte Ausführungsbeispiel einen Längslenker für eine gezogene Starrachse zeigt, kann der erfindungsgemäße Radaufhängungslenker auch als geschobener Längslenker, Querlenker, Schräglenker oder Raumlenker konfiguriert sein.
5) Obwohl das hier gezeigte Ausführungsbeispiel eine nicht gelenkte starre Hinterachse zeigt, kann der erfindungsgemäße Radaufhängungslenker auch für eine Vorderachse und/oder eine lenkbare Achse eingesetzt werden, wenn die Achsöffnung 11 ein entsprechendes Achselement einer derartigen Achse umschließt.
6) Obwohl die Verwendung einer Stahlrohrachse vorgeschlagen wird, können auch andere Materialien mit geeigneter Geometrie und Materialkennwerten zum Einsatz kommen, beispielsweise faserverstärkte Metalle oder Kunststoffe.

### Bezugszeichenliste

- 1: Längslenker
- 11: Achsöffnung
- 11a: Umfangsrand
- 12: Gelenköffnung
- 13: Schlitz
- 14: Öffnung
- 15: Federaufnahme
- 16: Befestigungsmittel
- 17: Klemmschraube
- 18: Profilöffnung
- 19: Rippen
- 2: Achsrohr
- 3: Bremsträger
- 4: Stoßdämpfer

## Patentansprüche

1. Radaufhängung für ein Fahrzeug mit einem Radaufhängungslenker (1) und einem Achselement (2), wobei der Radaufhängungslenker, insbesondere Längslenker (1), eine Gelenköffnung (12) zum schwenkbaren Befestigen des Radaufhängungslenkers an einem Fahrzeugrahmen und eine Achsöffnung (11) zum Befestigen eines Achselements (2) an dem Radaufhängungslenker aufweist, und wobei die Achsöffnung (11) im Wesentlichen rund ist und im Wesentlichen denselben Durchmesser wie ein korrespondierender Abschnitt des Achselements (2) aufweist, **dadurch gekennzeichnet, dass** die Achsöffnung (11) an ihrem Umfangsrand (11a) zumindest eine Unterbrechung in Form eines Schlitzes (13) aufweist, wobei ein Befestigungsmittel (17) im Bereich der Unterbrechung angeordnet ist, um die Unterbrechung so zu verringern, dass der Radaufhängungslenker an einem Achselement (2) geklemmt wird, wobei der Radaufhängungslenker gegossen ist, und wobei der Schlitz (13) in eine im wandbereich des Radaufhängungslenkers ausgebildeten Ausnehmung, vorzugsweise in einer im Wesentlichen abgerundeten Öffnung (14), endet.

2. Radaufhängung nach Anspruch 1, wobei zumindest ein Eingriffsmittel für einen formschlüssigen Eingriff der Achsöffnung (11) mit einem Achselement (2) angeordnet ist.

3. Radaufhängung für ein Fahrzeug mit einem Radaufhängungslenker (1) und einem Achselement (2), wobei der Radaufhängungslenker, insbesondere Längslenker (1), eine Gelenköffnung (12) zum schwenkbaren Befestigen des Radaufhängungslenkers an einem Fahrzeugrahmen und eine Achsöffnung (11) zum Befestigen eines Achselements (2) an dem Radaufhängungslenker aufweist, und wobei die Achsöffnung (11) im Wesentlichen rund ist und im Wesentlichen denselben Durchmesser wie ein korrespondierender Abschnitt des Achselements (2) aufweist, **dadurch gekennzeichnet, dass** die Achsöffnung (11) an ihrem Umfangsrand (11a) zumindest eine Unterbrechung in Form eines Schlitzes (13) aufweist, wobei ein Befestigungsmittel (17) im Bereich der Unterbrechung angeordnet ist, um die Unterbrechung so zu verringern, dass der Radaufhängungslenker an einem Achselement (2) geklemmt wird, wobei der Radaufhängungslenker gegossen ist, und wobei zumindest ein Eingriffsmittel für einen formschlüssigen Eingriff der Achsöffnung (11) mit einem Achselement (2) angeordnet ist,
um eine Indikatorfunktion zur Ermittlung einer unerwünschten Verdrehung des Achselements (2) zu bilden.

4. Radaufhängung nach Anspruch 3, wobei die Unterbrechung durch einen Schlitz (13) gebildet ist, der in einer im Wesentlichen abgerundeten Öffnung (14), vorzugsweise in einer kreisrunden oder ovalen Öffnung endet oder bis zur Außenkante des Radaufhängungslenkers durchgeführt ist.

5. Radaufhängung nach einem der vorherigen Ansprüche, wobei die Achsöffnung (11) im Wesentlichen der Formgebung des korrespondierenden Achselementes (2) entspricht.

6. Radaufhängung nach einem der vorherigen Ansprüche, wobei der Radaufhängungslenker aus Sphäroguss GGG, Grauguss GG oder Vermicular-Graphitguss GGV gegossen ist.

7. Radaufhängung nach einem der vorherigen Ansprüche, wobei ein Aufnahmeelement (15) für eine Feder der Fahrzeugachse und Befestigungsmittel (16) für einen Stoßdämpfer (4) an dem Radaufhängungslenker angeordnet sind.

8. Radaufhängung nach einem der vorherigen Ansprüche, wobei der Radaufhängungslenker im Wesentlichen ein T-Profil oder ein Doppel-T-Profil aufweist.

9. Verfahren zum Herstellen eines Radaufhängungslenkers und eines Achselements für ein Fahrzeug mit folgenden Schritten:
Gießen eines Radaufhängungslenkers mit einer im Wesentlichen runden Achsöffnung (11) für die Aufnahme eines Achselements (2), wobei die Achsöffnung (11) im Wesentlichen denselben Durchmesser wie ein korrespondierender Abschnitt des Achselements (2) aufweist,
Vorsehen einer Unterbrechung in Form eines Schlitzes (13) am Umfangsrand (11a) der Achsöffnung (11), der in einer im Wesentlichen abgerundeten Öffnung (14), vorzugsweise in einer kreisrunden oder ovalen Öffnung endet, und
Vorsehen eines Befestigungsmittels (17) im Bereich der Unterbrechung, um die Unterbrechung so zu verringern, dass der Radaufhängungslenker an dem Achselement (2) geklemmt wird.

10. Verfahren nach Anspruch 9, des Weiteren mit dem Schritt:
Ausbilden zumindest eines Eingriffsmittels für einen formschlüssigen Eingriff der Achsöffnung (11) mit einem Achselement (2).

11. Verfahren zum Herstellen eines Radaufhängungslenkers und eines Achselements für ein Fahrzeug mit folgenden Schritten:
Gießen eines Radaufhängungslenkers mit einer im Wesentlichen runden Achsöffnung (11) für die Aufnahme eines Achselements (2), wobei die Achsöffnung (11) im Wesentlichen denselben Durchmesser wie ein korrespondierender Abschnitt des Achselements (2) aufweist,
Vorsehen einer Unterbrechung in Form eines Schlitzes (13) am Umfangsrand (11a) der Achsöffnung (11),
Ausbilden zumindest eines Eingriffsmittels für einen formschlüssigen Eingriff der Achsöffnung (11) mit dem Achselement (2), um eine Indikatorfunktion zur Ermittlung einer unerwünschten Verdrehung des Achselements (2) zu bilden und
Vorsehen eines Befestigungsmittels (17) im Bereich der Unterbrechung, um die Unterbrechung so zu verringern, dass der Radaufhängungslenker an dem Achselement (2) geklemmt wird.

## Claims

1. Wheel suspension for a vehicle, having a wheel suspension arm (1) and an axle element (2), wherein the wheel suspension arm, especially a trailing arm (1), having a link opening (12) for the pivoting fixation of the wheel suspension arm to a vehicle frame and an axle opening (11) for the fixation of an axle element (2) to the wheel suspension arm, wherein the axle opening (11) is essentially round and has essentially the same diameter as a corresponding segment of the axle element (2), **characterized in that** the axle opening (11) has at its peripheral edge (11a) at least one interruption in the form of a slot (13), that a fastening means (17) is arranged in the area of the interruption in order to decrease the interruption so that the wheel suspension arm can be clamped on an axle element (2), wherein the wheel suspension arm is cast, and wherein the slot (13) ends in a clearance, formed in the wall region of the suspensions arm, preferably in an essentially rounded opening (14).

2. Wheel suspension according to claim 1, wherein at least one engaging means is arranged for a form-fitting engagement of the axle opening (11) with an axle element (2).

3. Wheel suspension for a vehicle, having a wheel suspension arm (1) and an axle element (2), wherein the wheel suspension arm, especially a trailing arm (1), having a link opening (12) for the pivoting fixation of the wheel suspension arm to a vehicle frame and an axle opening (11) for the fixation of an axle element (2) to the wheel suspension arm, wherein the axle opening (11) is essentially round and has essentially the same diameter as a corresponding segment of the axle element (2), **characterized in that** the axle opening (11) has at its peripheral edge (11a) at least one interruption in the form of a slot (13), that a fastening means (17) is arranged in the area of the interruption in order to decrease the interruption so that the wheel suspension arm can be clamped on an axle element (2), wherein the wheel suspension arm is cast, and wherein at least one engaging means is arranged for a form-fitting engagement of the axle opening (11) with an axle element (2), for functioning as an indicator to detect an undesirable twisting of the axle element (2).

4. Wheel suspension according to claim 3, wherein the interruption is formed by a slot (13), which ends in an essentially rounded opening (14), preferably in a round or oval opening, or is taken as far as the outer edge of the wheel suspension arm.

5. Wheel suspension according to one of the proceeding claims, wherein the axle opening (11) essentially corresponds to the configuration of the corresponding axle element (2).

6. Wheel suspension according to one of the preceding claims, wherein the wheel suspension arm is cast from a spherulitic graphite iron GGG, gray cast iron GG, or vermicular graphite cast iron GGV.

7. Wheel suspension according to one of the preceding claims, wherein a receiving element (15) for a spring of the vehicle axle and fastening means (16) for a shock absorber (4) are arranged on the wheel suspension arm.

8. Wheel suspension according to one of the preceding claims, wherein the wheel suspension arm essentially has a T-profile or a double-T-profile.

9. Method for production of a wheel suspension arm and an axle element for a vehicle, with the following steps:
casting of a wheel suspension arm with an essentially rounded axle opening (11) for receiving an axle element (2), whereby the axle opening (11) is essentially having the same diameter as a corresponding section of the axle element (2),
providing of an interruption (13) formed as a slot (13) at the peripheral edge (11a) of the axle opening (11), that ends in an essentially rounded opening (14), preferably in a round or oval opening, and
providing of a fastening means (17) in the region of the interruption, in order to minimize the interruption in such a way that the wheel suspension arm is clamped to the axle element (2).

10. Method according to claim 9, furthermore with the step:
configuring of at least one engaging means for a form-fitting engagement of the axle opening (11) with an axle element (2).

11. Method for production of a wheel suspension arm and an axle element for a vehicle, with the following steps:
casting of a wheel suspension arm with an essentially rounded axle opening (11) for receiving an axle element (2), whereby the axle opening (11) is essentially having the same diameter as a corresponding section of the axle element (2),
providing of an interruption (13) formed as a slot (13) at the peripheral edge (11a) of the axle opening (11), forming at least one engaging means for a form-fitting engagement of the axle opening (11) with an axle element (2), for functioning as an indicator to detect an undesirable twisting of the axle element (2), and
providing of a fastening means (17) in the region of the interruption, in order to minimize the interruption in such a way that the wheel suspension arm is clamped to the axle element (2).

## Revendications

1. Suspension de roue pour un véhicule automobile comprenant un bras de suspension de roue (1) et un élément d'essieu (2), dans laquelle le bras de suspension de roue, en particulier un bras longitudinal (1), comprend une ouverture d'articulation (12) pour la fixation pivotante du bras de suspension de roue sur un châssis de véhicule et une ouverture d'essieu (11) pour la fixation d'un élément d'essieu (2) sur le bras de suspension de roue, et dans laquelle l'ouverture d'essieu (11) est sensiblement ronde et présente sensiblement le même diamètre qu'un tronçon correspondant de l'élément d'essieu (2), **caractérisée en ce que** l'ouverture d'essieu (11) comporte à sa bordure périphérique (11a) au moins une interruption sous la forme d'une fente (13), et un organe de fixation (17) est agencé dans la région de l'interruption, afin de réduire l'interruption, **en ce que** le bras de suspension de roue (1) est serré sur l'élément d'essieu (2), et le bras de suspension de roue est une pièce coulée, et la fente (13) se termine dans un évidement ménagé dans la zone de paroi du bras de suspension de roue, de préférence dans une ouverture sensiblement arrondie (14).

2. Suspension de roue selon la revendication 1, dans laquelle est agencé au moins un moyen d'engagement pour un engagement à coopération de formes de l'ouverture d'essieu (11) avec un élément d'essieu (2).

3. Suspension de roue pour un véhicule automobile comprenant un bras de suspension de roue (1) et un élément d'essieu (2), dans laquelle le bras de suspension de roue, en particulier un bras longitudinal (1), comprend une ouverture d'articulation (12) pour la fixation pivotante du bras de suspension de roue sur un châssis de véhicule et une ouverture d'essieu (11) pour la fixation d'un élément d'essieu (2) sur le bras de suspension de roue, et dans laquelle l'ouverture d'essieu (11) est sensiblement ronde et présente sensiblement le même diamètre qu'un tronçon correspondant de l'élément d'essieu (2), **caractérisée en ce que** l'ouverture d'essieu (11) comporte à sa bordure périphérique (11a) au moins une interruption sous la forme d'une fente (13), et un organe de fixation (17) est agencé dans la région de l'interruption, afin de réduire l'interruption, **en ce que** le bras de suspension de roue (1) est serré sur l'élément d'essieu (2), et le bras de suspension de roue est une pièce coulée, et au moins un moyen d'engagement est agencé pour un engagement à coopération de formes de l'ouverture d'essieu (11) avec un élément d'essieu (2), afin de former une fonction d'indication pour déterminer une rotation non désirée de l'élément d'essieu (2).

4. Suspension de roue selon la revendication 3, dans laquelle l'interruption est formée par une fente (13) qui se termine dans une ouverture sensiblement arrondie (14), de préférence dans une ouverture circulaire ou ovale, ou se poursuit jusqu'à l'arête extérieure du bras de suspension de roue.

5. Suspension de roue selon l'une des revendications précédentes, dans laquelle l'ouverture d'essieu (11) correspond sensiblement à la conformation de l'élément d'essieu (2) correspondant.

6. Suspension de roue selon l'une des revendications précédentes, dans laquelle le bras de suspension de roue est coulé en fonte sphéroïdale GGG, en fonte grise GG, ou en fonte au graphite vermiculaire GGV.

7. Suspension de roue selon l'une des revendications précédentes, dans laquelle un élément de réception (15) pour un ressort de l'essieu de véhicule et un moyen de fixation (16) pour un amortisseur (4) sont agencés sur le bras de suspension de roue.

8. Suspension de roue selon l'une des revendications précédentes, dans laquelle le bras de suspension de roue présente sensiblement un profil en T ou un profil en T double.

9. Procédé pour fabriquer un bras de suspension de roue et un élément d'essieu pour un véhicule automobile, comprenant les étapes suivantes :
on coule un bras de suspension de roue avec une ouverture d'essieu (11) sensiblement ronde pour la réception d'un élément d'essieu (2), tel que l'ouverture d'essieu (11) présente sensiblement le même diamètre qu'un tronçon correspondant de l'élément d'essieu (2),
on réalise une interruption sous la forme d'une fente (13) sur la bordure périphérique (11a) de l'ouverture d'essieu (11), qui se termine dans une ouverture sensiblement arrondie (14), de préférence dans une ouverture circulaire ou ovale, et
on prévoit un organe de fixation (17) dans la région de l'interruption, afin de réduire l'interruption de telle manière que le bras de suspension de roue est serré sur l'élément d'essieu (2).

10. Procédé selon la revendication 9, comprenant en outre l'étape consistant à réaliser au moins un moyen d'engagement pour un engagement à coopération de formes de l'ouverture d'essieu (11) avec un élément d'essieu (2).

11. Procédé pour fabriquer un bras de suspension de roue et un élément d'essieu pour un véhicule automobile, comprenant les étapes suivantes :
on coule un bras de suspension de roue avec une ouverture d'essieu (11) sensiblement ronde pour la réception d'un élément d'essieu (2), tel que l'ouverture d'essieu (11) présente sensiblement le même diamètre qu'un tronçon correspondant de l'élément d'essieu (2),
on réalise une interruption sous la forme d'une fente (13) sur la bordure périphérique (11a) de l'ouverture d'essieu (11),
on réalise au moins un moyen d'engagement pour un engagement à coopération de formes de l'ouverture d'essieu (11) avec l'élément d'essieu (2), afin de former une fonction d'indication pour déterminer une rotation non désirée de l'élément d'essieu (2), et
on prévoit un organe de fixation (17) dans la région de l'interruption, afin de réduire l'interruption de telle manière que le bras de suspension de roue est serré sur l'élément d'essieu (2).
